# EUROPEAN PATENT SPECIFICATION

(11) **EP 0 443 347 B1**
(45) Date of publication and mention of the grant of the patent: **10.04.1996**
(21) Application number: 91101220.1
(22) Date of filing: 30.01.1991
(51) Int. Cl.: A47J 37/06

(54) **Horizontal grill apparatus**
Horizontales Grillgerät
Gril horizontal

(30) Priority: 20.02.1990 PT 93201
(43) Date of publication of application: 28.08.1991
(73) Proprietor: GRESILVA, METALURGICA INDUSTRIAL E ELECTRODOMESTICOS, LDA., P-2715 Pero Pinheiro (PT)
(72) Inventor: da Silva, Amandio Machado, P-2715 Pero Pinheiro (PT)
(74) Representative: Kern, Wolfgang, Dipl.-Ing.

(56) References cited:
- EP-A- 0 212 750
- WO-A-87/05197
- FR-A- 361 043
- GB-A- 837 393

## Description

The present invention refers to a horizontal griller or grill apparatus.

It has been found out that on the field of grillers for industrial and domestic use, mainly grillers for food, the elimination of smokes which are always detrimental to the health, as well as the limitating of smells due to the uncomfortable atmosphere they provoke are most important problems to be solved.

Pursuant to these activities there was launched already in Portugal the vertical griller, which is object of a Patent No. 70 846, and in various other countries to which it is being exported. This griller obeys to the VDE norms of quality, duly approved.

In order to further improve grill apparatuses of that kind the invention which may be concerned mainly for industrial purposes but to domestic use as well, is based on an extensive study and experiences carried out to reach the results now achieved and which consist of the following:
a) The horizontal griller is built of stainless steel with the walls duly isolated so that there will not be verified any loss of heat and its exterior temperature is in accordance with that demanded by the norms of quality;
b) It has the form of a parallelepiped and has a grill on its upper part placed horizontally, and is provided with dimensions adequated to each model;
c) On the sides of the apparatus, at a level below the griller, the distributing sources of heat are disposed vertically, and they can support, if necessary, a ventilator to activate the circulation of heat;
d) Parallel to the grill, but on the lower part, there is a drawer to receive the residues of the grilled food, which has the advantage of not provoking smokes or smells, once these residues are not in contact with the sources of heat;
e) Wheels may be applied to the feet of the griller's structure for greater facility of displacement of the apparatus when it concerns models for industrial purposes, since the ones for domestic use can easily be handled.

A grill apparatus according to the preamble of claim 1 is known from GB-A-837 393. According to this document, the food placed on the grill is placed in the center of the grill apparatus. Each side wall carries a pair of electric resistance heating elements which are arranged respectively above and beneath the space occupied by the viands to be cooked, so that heat is radiated in all directions to the viands. Thus, the viands are heated from the top and the bottom and may quickly get burned in such a grill since the heat is directly sent from the heating elements to the grill. It is difficult and complicated to directly look at the food placed on the grill without being burnt by the heat leaving the inner space of the apparatus through a longitudinal opening at the top of the apparatus.

It is an object of the invention to provide a grill apparatus which may easier be operated.

This object is achieved by a grill apparatus made of stainless steel, comprising a horizontal grill on which the food is placed, a source of heat in a form of a longitudinal burner which is operated with gas or electricity, extends laterally below the grill on the sides thereof and which includes a burning chamber, isolators located between the burning chamber and the walls of the apparatus, and a reception drawer placed below and in parallel with the grill, wherein the grill is placed on the upper part whereas the source of heat is placed at the opposite, lower part of the apparatus, the burning chamber is vertically disposed above said source of heat and comprises an upper portion which is curved to the underside of said grill, and a heat spreading panel is vertically located at the inner side of said burning chamber in parallel therewith, said heat spreading panel extending from the source of heat to the upper portion of said burning chamber, ending a certain distance apart from said upper portion and comprising a plurality of longitudinal passage openings.

A preferred embodiment of the invention is disclosed in the subclaim.

To better assist the comprehension of the invention, attention is drawn to the accompanied two sheets of drawings, supplied at exemplification, since any alteration of a detail which is not out of the field described should be considered as covered by the scope of the invention.

In the drawings:
- Fig. 1: is a front, sectional, perspective view of the grill apparatus according to the invention;
- Fig. 2: is a front view of the grill apparatus of Fig. 1; and
- Fig. 3: is a sectional side view of the grill apparatus of Fig. 1.

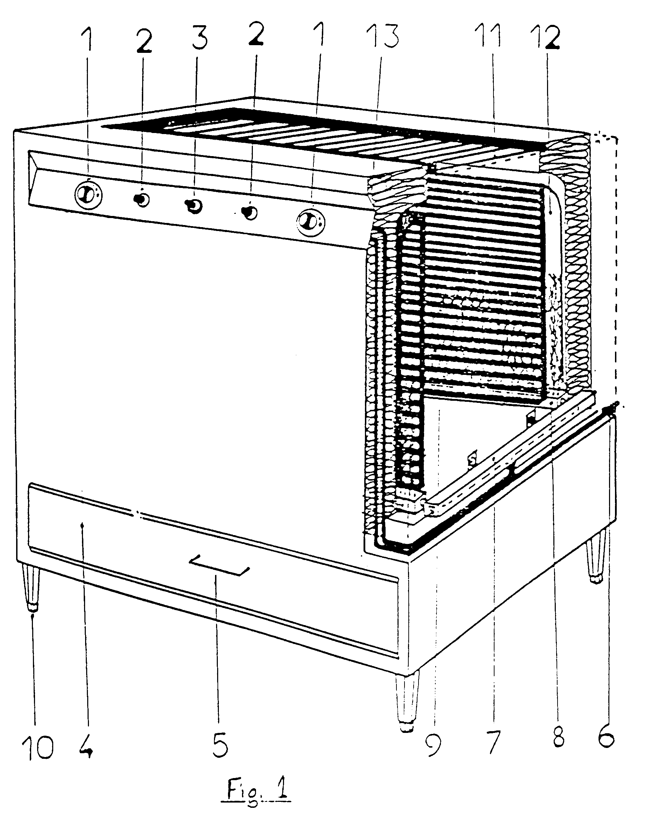

Fig. 1 shows the grill apparatus with a lateral cut, provided with a gas control device (tab) 1, a plug 2 of the security device against accidental extinction of gas, a lighter 3, a receptive drawer 4 of residues, a handle 5 of the drawer, an entry tubing 6 for the gas, a gas collector 7, a longitudinal burner 8, a heat spreading panel 9, feet and/or wheels 10, a horizontal grill 11 on which the food is placed, a burning chamber 12 and isolators 13.

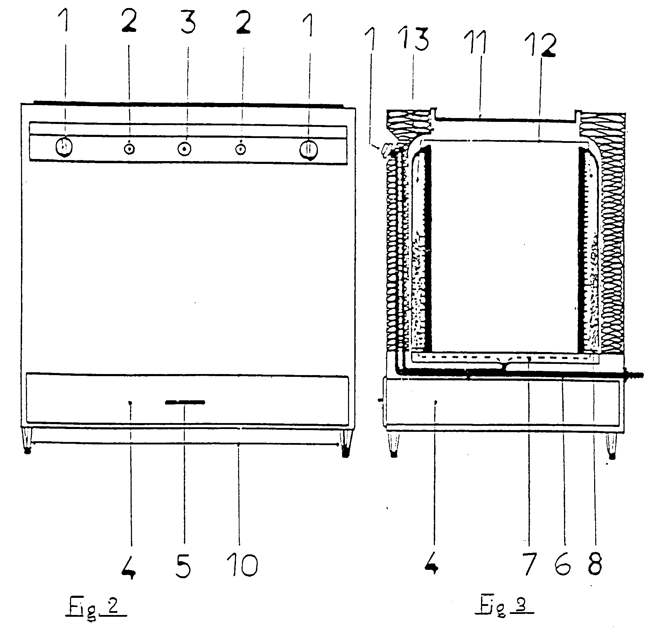

Fig. 2 shows a front view of the grill apparatus including elements referred to in Fig. 1.

Fig. 3 shows the cut side view, also including the parts already referred to in Fig. 1.

This grill apparatus is conceived to work in two versions - by gas or by electricity - being the basis completely identical in both cases, and can be easily adapted to either case upon assembling.

To summarize the above one can say that the present invention refers to a grill apparatus with structure in stainless steel, needed for industrial or domestic purposes, with isolated walls to prevent the loss of heat. On its upper part there is a grill 11 placed horizontally, and at a level lower to this, placed sideways, there are the heat distributing sources, which may be provided with a ventilator to activate the circulation of heat. In parallel to the grill 11 below, there is a reception box 4 for the food residues, which do not touch the heating source, therefore not producing any smokes or smells from burnt fat.

## Claims

1. Grill apparatus made of stainless steel, comprising
a horizontal grill (11) on which the food is placed,
a source of heat in a form of a longitudinal burner (8) which is operated with gas or electricity, extends laterally below the grill (11) on the sides thereof and which includes a burning chamber (12),
isolators (13) located between the burning chamber (12) and the walls of the apparatus, and
a reception drawer (4) placed below and in parallel with the grill (11),
**characterized in that**
the grill (11) is placed on the upper part whereas the source of heat (8) is placed at the opposite, lower part of the apparatus,
the burning chamber (12) is vertically disposed above said source of heat (8) and comprises an upper portion which is curved to the underside of said grill (11), and a heat spreading panel (9) is vertically located at the inner side of said burning chamber (12) in parallel therewith, said heat spreading panel (9) extending from the source of heat to the upper portion of said burning chamber (12), ending a certain distance apart from said upper portion and comprising a plurality of longitudinal passage openings.

2. Grill apparatus according to claim 1, characterized in that the curvature of the upper portion of said burning chamber (12) is 90°.

## Patentansprüche

1. Grillgerät aus Stahl,
welches einen horizontalen Grill (11), auf den das Lebensmittel angeordnet wird,
eine Wärmequelle in Form eines länglichen Brenners (8), welcher durch Gas oder elektrisch betrieben wird, sich seitlich unterhalb der Seiten des Grills (11) erstreckt und eine Brennkammer (12) umfaßt,
zwischen der Brennkammer (12) und den Wänden des Geräts angeordnete Isolierungen (13)
und einen unterhalb und parallel zum Grill ausgerichteten Aufnahmekasten aufweist,
**dadurch gekennzeichnet, daß**
der Grill (11) an der Oberseite angeordnet ist, die Wärmequelle (8) hingegen an der gegenüberliegenden, unteren Seite des Geräts angeordnet ist,
die Brennkammer (12) vertikal oberhalb der Wärmequelle (8) vorgesehen ist und einen oberen Abschnitt aufweist, welcher zur Unterseite des Grills (11) gekrümmt ist, und eine wärmeausbreitende Platte (9) vertikal an der Innenseite der Brennkammer und parallel dazu angeordnet ist, welche wärmeausbreitende Platte (9) sich von der Wärmequelle zum oberen Abschnitt der Brennkammer (12) erstreckt, in einem bestimmten Abstand von dem oberen Abschnitt endet und mehrere längliche Durchtrittsöffnungen aufweist.

2. Grillgerät nach Anspruch 1, **dadurch gekennzeichnet, daß** die Krümmung im oberen Abschnitt der Brennkammer (12) 90° beträgt.

## Revendications

1. Dispositif formant gril en acier inoxydable, comprenant
un gril horizontal (11) sur lequel sont placés les aliments,
une source de chaleur se présentant sous la forme d'un brûleur longitudinal (8) qui fonctionne au gaz ou à l'électricité, s'étend latéralement sous le gril (11), sur ses côtés et qui comprend une chambre de combustion (12),
des éléments isolants (13) situés entre la chambre de combustion (12) et les parois du dispositif,
et
un tiroir de réception (4) placé sous et de façon parallèle au gril (11),
caractérisé en ce que
le gril (11) est placé sur la partie supérieure tandis que la source de chaleur (8) est placée sur la partie inférieure, opposée, du dispositif,
la chambre de combustion (12) est disposée verticalement au-dessus de la source de chaleur (8) et comprend une partie supérieure qui est incurvée en direction de la face inférieure du gril (11), et un panneau distributeur de chaleur (9) est placé verticalement sur la face intérieure de la chambre de combustion (12) de façon parallèle à celle-ci, ce panneau distributeur de chaleur (9) s'étendant de la source de chaleur vers la partie supérieure de la chambre de combustion (12), se terminant à une certaine distance de cette partie supérieure, et comprenant une pluralité d'ouvertures de passage longitudinales.

2. Dispositif formant gril selon la revendication 1, caractérisé en ce que la courbure de la partie supérieure de la chambre de combustion (12) est de 90°.
